# EUROPEAN PATENT APPLICATION

(11) **EP 4 020 765 A1**
(43) Date of publication of application: **29.06.2022**
(21) Application number: 20275190.5
(22) Date of filing: 22.12.2020
(51) Int. Cl.: H02K 3/24

(54) **STATOR FOR ELECTRICAL MACHINES**

(71) Applicant: Hamilton Sundstrand Corporation, Charlotte, NC 28217-4578 (US)
(72) Inventor: SANGHA, Parminder, Solihull West Midlands B98 8SY (GB); EASLY, Christian, Stratford-Upon-Avon Warwickshire CV37 9EX (GB)
(74) Representative: Dehns

(57) **Abstract**

A stator (4) for an electrical machine is provided. The stator may include a core (6). A plurality of radial slots (8) may be formed in the core spaced circumferentially around a central axis (X) of the stator. The core may further include a plurality of teeth (18), each tooth formed between circumferentially adjacent slots. The stator may include a plurality of windings (10), each winding extending around at least one tooth of the core. The stator may further comprise a plurality of spacer components (28), one of the spacer components being positioned between two or more adjacent windings in a slot so as to form a coolant flow channel for cooling the windings in the slot.

## Description

### TECHNICAL FIELD

The present disclosure relates to electrical machines such as motors and generators and in particular to cooling such machines.

### BACKGROUND

Electrical machines such as motors and generators generate heat during operation. As machine sizes increase, the heat generated in the machine increases, meaning that in many machines it is necessary to cool the machine to prevent overheating and also to maintain performance.

The main area of heat generation is in the stator windings and stator core. Some machines use liquid cooling to improve the motor power density. In one example, the stator windings may be directly flooded with a cooling liquid such as oil. However, there is a need to further improve the cooling in electrical machines to improve the efficiency thereof. This is especially true in some applications such as for example in electric propulsion motors to be used in vehicles such as cars and aircraft.

### SUMMARY

According to a first aspect of this disclosure, there is provided a stator for an electrical machine, the stator comprising: a core; a plurality of radial slots in the core spaced circumferentially around a central axis of the stator; a plurality of teeth, each tooth formed between circumferentially adjacent slots; and a plurality of windings, wherein each winding extends around at least one tooth; and a plurality of spacer components, one of the spacer components being positioned between two or more adjacent windings in a slot so as to form a coolant flow channel for cooling the windings in the slot.

The stator including the spacer component positioned between two or more adjacent windings in a slot provides a coolant flow channel formed between the adjacent windings. This provides an improved means of cooling the windings in the slot, thus improving the performance of an electrical machine including a stator according to the disclosure. Additionally, the spacer may act to hold adjacent windings in position within a slot, thus more accurately positioning coolant flow channel(s) within the slot and thus improving the cooling efficiency provided by the coolant flow channel(s).

In any example of the stator, at least one of the spacer components may comprise one or more coolant flow passages extending there through to form a coolant flow channel. Further, the one or more coolant flow passages may be located within the at least one spacer component so as to evenly cool the surface area of the at least one spacer component. For example, any desired number of coolant flow passages may be provided in the at least one spacer component. Alternatively, a single coolant flow passage may be provided in the at least one spacer component and may be configured such that the windings are separated from the coolant flowing in the passage by only a thin wall of the spacer component.

In any example of the stator, a coolant flow channel may be provided between at least one of the spacer components and at least one winding adjacent thereto. In this example, coolant may flow between the spacer component and the at least one winding thus providing further cooling to the winding.

It will be understood that the at least one spacer component can be positioned in any desired orientation within the slot. In one example of the disclosure, the at least one spacer component may be positioned between two or more circumferentially adjacent windings in the slot.

A coolant flow channel may be provided between the spacer component and at least one winding adjacent to a first circumferential side thereof and between the spacer component and at least one winding adjacent to a second circumferential side thereof. In this arrangement, a continuous coolant flow channel may be provided extending around the spacer component from the first side to the second side thereof.

The space component may take any desired form. For example, the spacer component may have substantially parallel sides extending along an axis. In any example of the disclosure however, the at least one of the plurality of spacer components may comprise a body having tapered sides. This may allow the sides of the spacer component to maintain a substantially constant spacing from the adjacent windings thus providing a coolant flow channel with a substantially constant cross sectional area.

In any example of the disclosure, at least one of the plurality of spacer components may further comprise a flange extending outwardly from the body at an end thereof.

In any example of the disclosure, at least one of the plurality of spacer components may further comprise one or more sets of projections extending outwardly from circumferentially opposite sides thereof. The flange and/or the projections may shape the coolant flow passages and/ or may help in positioning the spacer component between the adjacent windings.

The at least one of the plurality of spacer components may comprise a plurality of sets of projections, and the plurality of sets of projections may be radially spaced. This may allow multiple spaced coolant flow channels to be formed between the respective sets of projections thus providing further control of the cooling provided to the windings.

The one or more of the sets of projections may be adapted to extend between two radially adjacent windings. In this example, the one or more of the sets of projections may provide insulation between radially adjacent windings thus avoiding the need for a separate insulating component to be provided.

In addition or alternatively, one or more of the sets of projections may be adapted to extend from the opposite sides of the spacer component to the adjacent windings.

In any example of the disclosure, the coolant flow channel(s) may extend from a first axial end of the core to a second axial end thereof.

From a further aspect of the disclosure, an electrical machine comprising a stator according to the disclosure may be provided.

From a still further aspect of the disclosure, a method of cooling a stator or an electrical machine according to the disclosure is provided, the method comprising flowing coolant through the coolant flow channel(s). It will be appreciated that the coolant may be flowed through the coolant flow channels at a desired flow rate for the required cooling, the coolant flow channels being configured or dimensioned to control the flow rate.

From a still further aspect of the disclosure, a method of assembling a stator for an electrical machine is provided, the method comprising: assembling a plurality of windings on the stator, wherein each winding extends around at least one of a plurality of teeth, each tooth being formed between circumferentially adjacent radial slots in a core of the stator; either before or during assembling the plurality of windings, inserting a spacer component to be located between two or more adjacent windings in one of the slots; and either before or after inserting the spacer components, impregnating the windings with varnish or resin.

Features described in relation to one aspect of this disclosure may of course be applied to the further aspects thereof. In general, features of any example described herein may be applied wherever appropriate to any other example described herein. Where reference is made to different examples or sets of examples, it should be understood that these are not necessarily distinct but may overlap.

### BRIEF DESCRIPTION OF DRAWINGS

Certain examples of the disclosure will now be described by way of example only and with reference to the accompanying drawings in which:
Figure 1 shows a schematic cross section view of an outer rotor and stator of an electric motor according to the disclosure;
Figure 2 shows a schematic cross section view of an inner rotor and stator of an electric motor according to the disclosure;
Figure 3 shows a schematic cross section view of a part of an outer rotor and stator having a first example spacer component;
Figure 4 shows a schematic cross section view of a part of an outer rotor and stator having a second example spacer component;
Figure 5 shows a schematic cross-section view of a part of an outer rotor and stator having a third example spacer component;
Figure 6 shows a schematic cross-section view of a part of an inner rotor and stator having a fourth example spacer component;
Figure 7 shows a schematic cross-section view of a part of an inner rotor and stator having a fifth example spacer component;
Figure 8 shows a schematic cross section view of a part of an inner rotor and stator according to the disclosure; and
Figure 9 shows a schematic cross section view of a part of the inner rotor and stator of Figure 8 with an alternative spacer arrangement.

### DETAILED DESCRIPTION

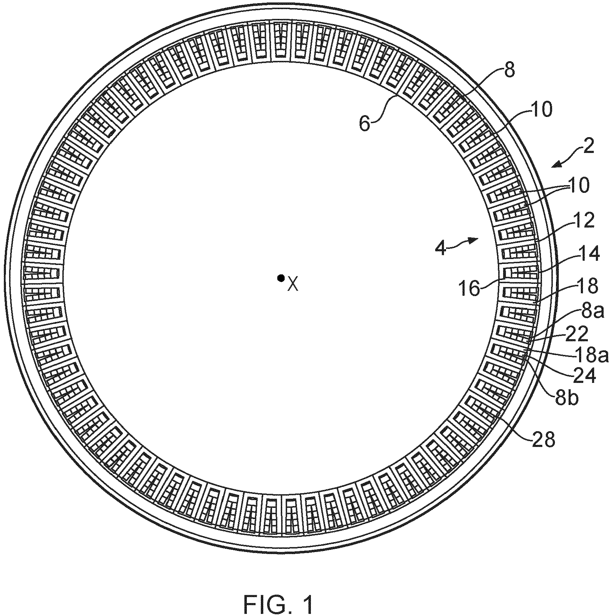

Figure 1 shows a rotor 2 and a stator 4 of an electrical machine (not shown). In this example, the machine is an electric motor. However, the principles of the disclosure may be applied to other electrical machines, for example generators.

The stator 4 comprises an annular core 6 which extends around a stator axis X, the annular core 6 also extending parallel to the stator axis X to form a cylindrical body. In the example of Figure 1, the rotor 2 is a radially outer rotor, which extends around the outer circumference of the stator 4. The core 6 comprises a plurality of slots 8 which receive windings 10. The slots 8 extend through the annular core 6 from a first axial end (not shown) to a second axial end (not shown) thereof. In the example shown, the slots 8 extend radially inwardly from the outer circumference 12 of the annular core 6 such that the slots 8 are open at their radially outer ends 14 but are closed at their radially inner ends 16. In this example, the slots 8 extend parallel to the axis X, but in other embodiments, they may be angled relative thereto.

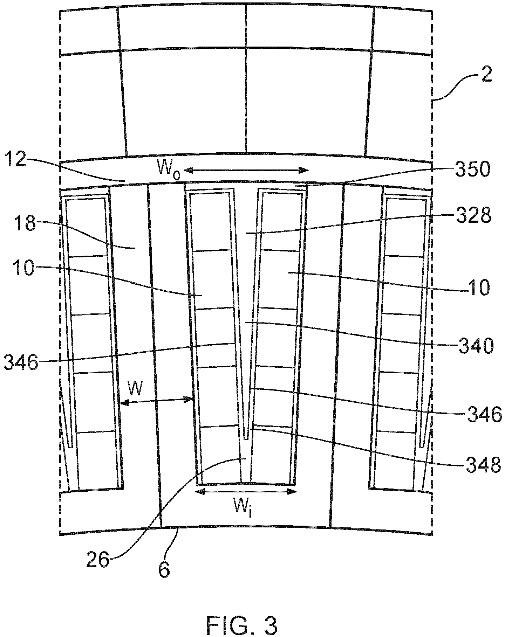

The core 6 further comprises a plurality of teeth 18 formed between the slots 8 and extending from the first axial end (not shown) to the second axial end (not shown) of the core 6. The teeth 18 have a constant width w (as seen in Figure 3) along the radial extent thereof. Thus, the slots 8 are tapered such that the width of the slots 8 increases in a radially outward direction, the width wₒ of the slots 8 at their radially outer ends 14 being greater than the width wᵢ of the slots 8 at their radially inner ends 16.

Although the teeth in the example shown have a constant width, in other examples the teeth may be tapered such that the width of the teeth may either increase or decrease in the radially outward direction. The shape of the slots will be defined by the shape of the teeth and in one example, the teeth may be tapered so as to form slots having parallel sides, the width of the slots remaining constant along the radial extent thereof.

Stator windings 10 are formed around each of the teeth 18 such that a first portion 22 of a winding 10 extends into a first slot 8a adjacent a first circumferential side of the tooth 18a and a second portion 24 of the winding 10 extends into a second slot 8b adjacent a second circumferential side of the tooth 18a, where the first and second slots 8a, 8b are located on either side of the same tooth 18a.

Within each slot 8, a gap 26 (see Figure 3) is provided between the second portion 24 of a first winding 10 and the first portion 22 of a second winding. The thickness of the windings is substantially constant along the radial extent thereof such that the gap 26 is tapered, the width of the gap 26 in the circumferential direction increasing from the radially inner end thereof to the radially outer end thereof.

It will be understood that in any example of the disclosure, the dimensions of the annular core 6, the number of slots 8 and teeth 18 provided and the dimensions of the slots 8 and the gaps 26 will vary depending on the design constraints and requirements of a particular electrical machine.

As described further below, spacer components 28 are provided in the gaps 26. The spacer components 28 can be made of any suitable material. In one example, the spacer components 28 may comprise a highly thermally conductive material such as, for example, a ceramic material.

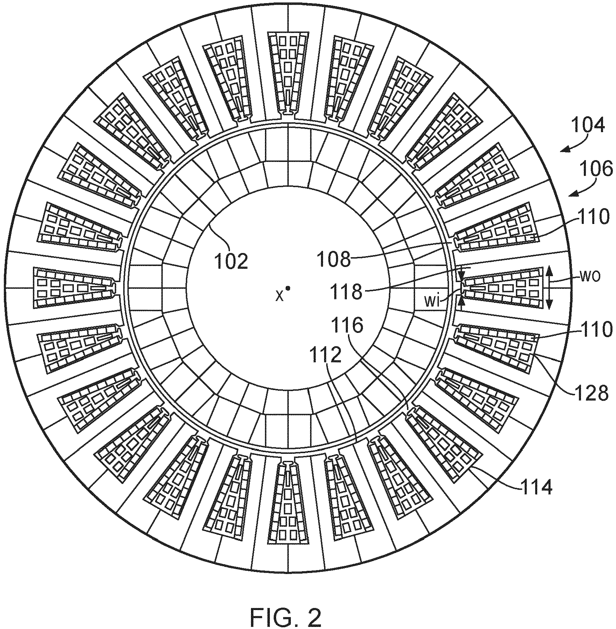

Figure 2 shows an alternative example of a rotor 102 and a stator 104 of an electric motor. Again, the principles of the disclosure may be applied to other electrical machines, for example generators.

The stator 104 comprises an annular core 106 which extends around a stator axis X and parallel to the axis X to form a cylindrical body. In the example of Figure 2, the rotor 102 is a radially inner rotor around the outer circumference of which the stator 104 extends.

The core 106 comprises a plurality of slots 108 which receive windings 110. The slots 108 extend through the annular core 106 from a first axial end (not shown) to a second axial end (not shown) thereof. In the example shown, the slots 108 extend radially outwardly from the inner circumference 112 of the annular core 106 such that the slots 108 are open at their radially inner ends 116 but are closed at their radially outer ends 114. In this example, the slots 108 extend parallel to the axis X, but in other embodiments, they may be angled relative thereto.

The core 106 further comprises a plurality of teeth 118 formed between the slots 108 and extending from the first axial end (not shown) to the second axial end (not shown) of the core 106. The teeth 118 again have a constant width along the radial extent thereof, such that the width of the slots 108 increases in a radially outward direction, the width wₒ of the slots 108 at their radially outer ends 114 being greater than the width wᵢ of the slots 108 at their radially inner ends 116.

Stator windings 110 are formed around each of the teeth 118 in a similar manner to that described above in relation to Figure 1. Thus, a gap (not shown) is again provided between the second portion of a first winding and the first portion of a second winding within each slot 108. The thickness of the windings is substantially constant along the radial extent thereof such that the gap 126 is tapered, the width of the gap 126 in the circumferential direction increasing from the radially inner end thereof to the radially outer end thereof.

Spacer components 128 are provided in the gaps.

In any example of a stator for an electric motor according to the disclosure, the windings 10; 110 may comprise copper Litz windings or shaped bundles of conductors such as copper wire. These may be stacked radially one above the other and be positioned within slots in the stator body as described above.

A method of assembling a stator according to the disclosure will now be described with reference to the example of Figure 1. It will be understood however that the method can also be used to assemble other example stators according to the disclosure such as, amongst others, the stator shown in Figure 2.

The method of assembling a stator according to the disclosure includes first assembling conductive windings 10 on the annular core 6. The conductive windings 10 may comprise Litz windings wound around the teeth 18 of the stator 4. In this example, the windings 10 are formed with a radial gap 26 extending there between within the slot 8 as described above.

A spacer component 28 can then be inserted into each slot 8 so as to extend into the gap 26 between the parts of the windings 10 located on either side of the slot 8 adjacent the teeth 18. The windings 10 may then be impregnated with varnish or resin so as to create solid winding bodies. In the method of this example, the spacer component 28 may hold the windings in a desired position prior to the varnish or resin being applied and solidifying.

In an alternative example, the windings 10 may be impregnated with varnish or resin before the spacer components 28 are then inserted into each slot 8 in the manner described above.

When in-situ in the gaps 26 in the slots 8 of the stator, the spacer components 28 are configured to form a passage for coolant fluid to flow through as will be described in further detail below.

Figure 3 shows a first example spacer component 328 according to the disclosure. The spacer component 328 is shown in a stator 4 of the type shown in Figure 1. It will be appreciated however that any of the spacer components described could equally be adapted for use in other stators according to the disclosure. For example, the spacer component 28 of Figure 3 could be inverted and used in a stator for an inner rotor such as that shown in Figure 2.

In the example of Figure 3, the spacer component 328 comprises a body 340 for insertion into the gap 26 between adjacent windings 10 and a flange 350 extending outwardly from the body 340 at the radially outer end thereof. The flange 350 is adapted to extend across the slot 8 and to be supported by the radially outer end of the windings 10. The body 342 of the spacer component comprises a triangular prism having tapered sides 344, 346 extending from the flange to a point and having an axial length corresponding to the distance between the first and second axial ends of the annular core 6. The body 342 is shaped to provide a space between each tapered side 344, 346 of the spacer component 328 and the windings 10 when inserted into the gap 26, i.e. the tapered sides 344, 346 of the body 342 extend at approximately the same angle as the sides of the windings 10 so as to form a roughly constant spacing between the tapered sides 344, 346 and the windings 10.

The spaces between the tapered sides 344, 346 and the windings 10 provide a coolant flow channel 348 for cooling fluid such as oil to flow through, thus increasing the surface area of the windings which is contacted by cooling fluid and improving the cooling capability and thus the efficiency of the stator. Further, by adjusting the size and shape of the spacer component 328, the dimensions of the coolant flow channel can be set to control the flow velocity of cooling fluid in the channel to increase the cooling efficiency achieved by the fluid.

As can be seen in Figure 3, in the example shown, a continuous coolant flow channel is provided extending from the flange 350, along a first side of the body 340, around the radially inner end of the body and along the opposite side of the body 340 to the flange 350.

It will be understood that the shape of the spacer component could take any desired form to provide coolant flow channels between the spacer component and the windings or to fit between the windings. Thus, in an alternative example of the disclosure in which the slots have parallel sides, the body of the spacer component may also be formed with parallel sides, having a substantially rectangular cross section.

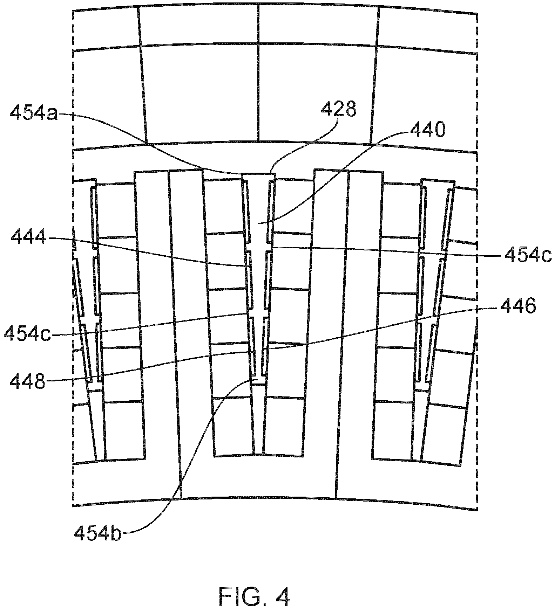

An alternative spacer component 428 for use in a stator 4 according to an example of the disclosure is shown in Figure 4. The spacer component 428 of this example again comprises a body 440 for insertion into the gap 26 between adjacent windings 10.

As in the example of Figure 3, the body 440 of the spacer component comprises a triangular prism having tapered sides 444, 446 extending from a wide end thereof to a point and having an axial length corresponding to the distance between the first and second axial ends of the annular core 6. The body 440 is shaped to provide a space between each tapered side 444, 446 of the spacer component 428 and the windings 10 when inserted into the gap 26, i.e. the tapered sides 444, 446 of the body 440 extend at approximately the same angle as the sides of the windings 10 to form a roughly constant spacing between the tapered sides 444, 446 and the windings 10.

In the example of Figure 4, the spacer component 428 is profiled, a number of radially spaced projections 454 extending outwardly from the tapered sides 444, 446 of the body 440 in a substantially circumferential direction to contact the sides of the windings 10, extending across the coolant channel 448. It will be understood that any suitable number of projections could be provided. In the example shown, a first set of projections 454 extend from the radially outer end of the body 440 and a second set of projections 454 extend from the radially inner end of the body 440. Two further sets of projections 454 are provided at equal intervals extending outwardly from both tapered sides 444, 446 of the body 440.

The provision of a profiled spacer component 428 may allow further control of the position of the windings 10 within the slots 8 and further control of the velocity of coolant flow in the coolant flow channels 448 formed between the projections 454.

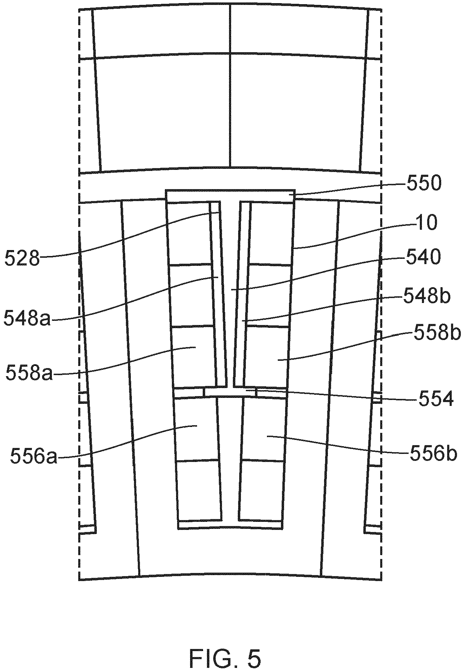

An alternative spacer component 528 for use in a stator 4 according to an example of the disclosure is shown in Figure 5. The spacer component 528 comprises a body 540 and a flange portion 550 substantially as in the example of Figure 3. In the Figure 5 example however, the body 540 has a pair of projections 554 extending substantially circumferentially from the radially inner end of the body 540. These projections 554 are configured to be wedged between two radially adjacent coils 556a, 558a and 556b, 558b in the stack of windings located on either circumferential side of the slot 8. The projections 554 thus act to separate the conductor coils 556a, 558a and 556b, 558b in the winding. When the spacer component 528 is in position between the circumferentially adjacent windings 10, a coolant flow channel 548a, 548b is formed on either circumferential side of the spacer component 528 between the spacer component 528, one of the projections 554 and a respective winding 10. Coolant may also flow through the gap provided radially internally of the projections 554 and between the adjacent windings 10.

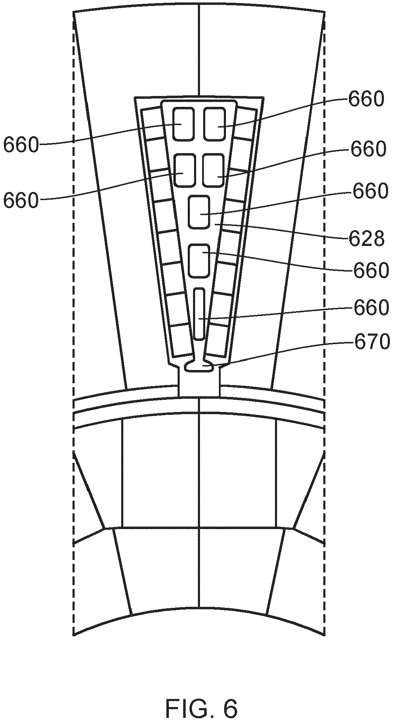

Figure 6 shows another example of a spacer component 628 in a stator 104 according to the disclosure. The spacer component 628 is substantially wedge shaped, i.e. it comprises a triangular prism having tapered sides 644, 646 and having an axial length corresponding to the distance between the first and second axial ends (not shown) of the annular core 6. The spacer component 628 of this example is shaped to substantially fill the gap between the windings 110 such that the tapered sides 644, 646 thereof are in contact with the windings 110 when inserted into the gap. Thus, the tapered sides 644, 646 extend at approximately the same angle as the sides of the windings 110.

In the example of Figure 6, the spacer component 628 has a flange portion 670 extending outwardly in a substantially circumferential direction from the radially inner end thereof. When the spacer component 628 is in-situ in the gap 126, the flange portion 670 is positioned radially internally of the windings 110 thus locating the spacer component 628 between the circumferentially adjacent windings 10.

The spacer component 628 is made of a material having high thermal conductivity such as a ceramic. A number of axially extending coolant flow passages 660 are provided in the spacer component 628. Cooling is therefore provided to the windings 110 by contact between the windings 110 and the spacer component 628, heat being removed from the spacer component 628 via coolant flowing through the coolant flow passages 660 therein which form one or more coolant flow channels.

It will be understood that any desired arrangement of coolant flow passages 660 may be provided within the spacer component 628. In the example of Figure 6, seven coolant flow passages 660 are provided within the spacer component 628. However, any suitable number of coolant flow passages may be provided, arranged such that substantially all of the surface area of the spacer component 628 is proximate to at least one of the coolant flow passages 660.

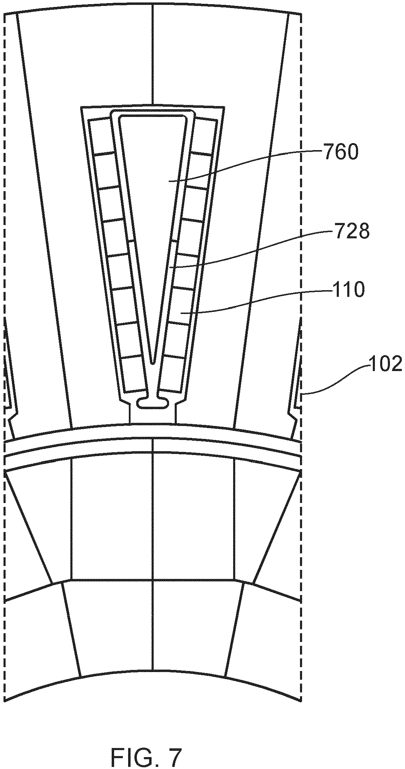

Figure 7 shows another example of a spacer component 728 in a stator 104 according to the disclosure. The spacer component 728 corresponds substantially to the wedge shaped spacer component 628 of Figure 6. In the example of Figure 7 however, the spacer component 728 is hollow, such that a single axially extending coolant flow passage 760 is provided therein. Cooling is again provided to the windings 110 by contact between the windings 110 and the spacer component 728, heat being removed from the spacer component 728 via the coolant flowing through the interior thereof. As can be seen, the coolant flow passage 760 may be configured such that the windings 110 are separated from the coolant flowing in the passage by only a thin wall of the spacer component 728.

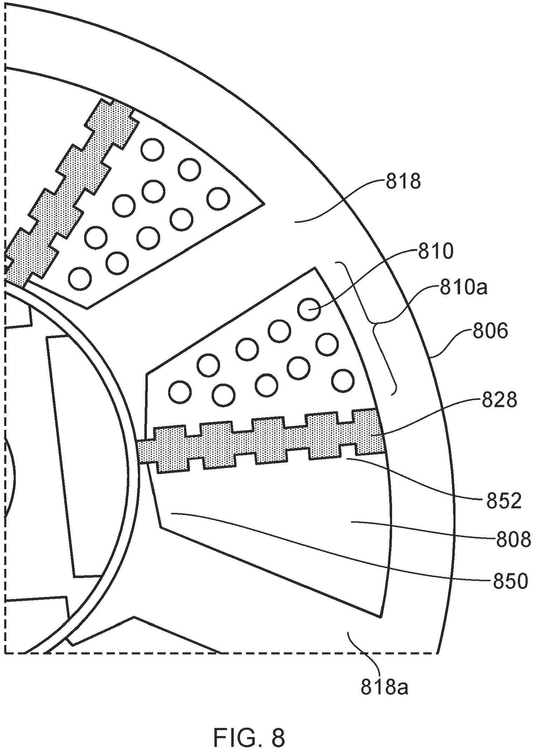

In an alternative example of the disclosure as shown in Figure 8 and which is applicable to an inner or outer rotor and stator, solid windings such as Litz windings may not be used. Rather, individual windings 810 formed from copper wire for example are wound around the teeth 818 of the annular core 806 and extend into the slots 808.

In the example shown in Figure 8, the windings 810 are wound around the nearest tooth 818 only. However if desired, each winding may extend around more than one tooth. In the example of Figure 8, a number of windings 810 are wound around a tooth 818 to extend into the slots 808 located circumferentially adjacent the tooth 818. The location of the winding cannot be exactly controlled but the windings will be formed adjacent to each other such that a group of windings 810a extending radially outwardly from the base 850 of the slot 808 and circumferentially outwardly from the tooth 818 is formed. As seen, when the group of windings 810a extends to a desired circumferential spacing from the tooth 818, a spacer component 828 is inserted into the slot 808 and arranged adjacent to the group of windings 810a.

In the example shown the spacer component 828 may be of a type similar to that shown in Figure 4. It will be appreciated that any type of spacer component according to the disclosure could be used.

In the example shown, the spacer component 828 extends in a substantially radial direction, for example at within 5° of the radial direction. It will be understood however that in alternative examples, the spacer component 828 could be inserted to extend at any desired angle within the slot. After the spacer component 828 has been inserted into the slot 808, further windings (not shown) are formed around a circumferentially adjacent tooth 818a on the other side of the slot 808 from the tooth 818 in order to extend into the remaining available space in the slot 808. This process may then be repeated until all the desired windings have been formed on the core 806. The slots 808 may then be impregnated with varnish or resin which solidifies to hold the windings 810 and the spacer components 828 in place.

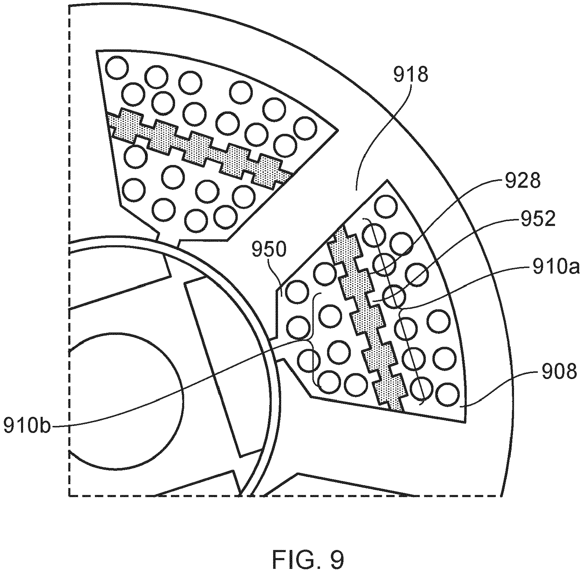

In the example of Figure 9, individual windings 910 as described in relation to Figure 8 may be used. In this example however, a spacer component 928 which extends across a slot 908 from one side thereof to the other and substantially perpendicular to the radial direction is provided. Thus, a group of windings 910a extending parallel to the base 950 of the slot 908 and circumferentially across the slot 908 from the tooth 918 is formed. The group of windings 910a may include some windings extending around the tooth located on the first side of the slot and other windings extending around the tooth located on the second, opposite side of the slot 908. The group of windings 910a may include two or more layers of windings in a radial direction as shown. When the group of windings 910a extends to a desired radial spacing from the base 950, a spacer component 928 is inserted into the slot 908 to extend across the slot 908 over the group of windings 910a. Thus, the spacer component may extend substantially perpendicular to the radial direction.

In the example shown the spacer component 928 may be of a type similar to that shown in Figure 4 but having substantially parallel sides rather than tapered sides. It will be appreciated however that any type of spacer component according to the disclosure could be used. It will be understood that in alternative examples, the spacer component 928 could be inserted to extend at any desired angle within the slot.

After the spacer component 928 has been inserted into the slot 908, further windings 910b are formed around the teeth 918 on either side of the slot in order to extend into the remaining available space in the slot 908. This process may then be repeated until all the desired windings have been formed on the core 906. The slots 908 may then be impregnated with varnish or resin which solidifies to hold the windings 910 and the spacer components 928 in place.

In both the examples of Figure 8 and 9, it will be understood that the spacer component 828, 928 can be configured to provide coolant flow channels once the varnish or resin has solidified which will not be filled with varnish or resin. For example, coolant flow channels could be provided in the gaps 852, 952 between adjacent projections on the spacer component 828, 928.

A method of cooling a stator in an electrical machine is disclosed in which a cooling fluid such as oil is flowed through the coolant flow channel(s) formed by the spacer components in the stator. It will be appreciated that the various spacer components described above allow the number and cross sectional area of the coolant flow channel(s) to be controlled. Thus, the volume and velocity of oil flowing through the coolant flow channels can be controlled so as to improve cooling of the stator windings. Further, the surface area of the windings to which cooling is applied may also be controlled using any desired combination of the various spacer component features disclosed herein.

In addition to the above, any of the spacer components disclosed herein may provide a means for positioning windings within the stator slots so as to improve the mechanical robustness of the stator.

Although not shown in the drawings, it will be understood that a spacer component having any combination of the features described and shown in the accompanying drawings could be provided. Further, a combination of spacer components having different features as described could be used in a single stator.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A stator for an electrical machine, the stator comprising:
a core;
a plurality of radial slots in the core spaced circumferentially around a central axis of the stator;
a plurality of teeth, each tooth formed between circumferentially adjacent slots;
a plurality of windings,
wherein each winding extends around at least one tooth; and
a plurality of spacer components, one of the spacer components being positioned between two or more adjacent windings in a slot to form a coolant flow channel for cooling the windings in the slot.

2. A stator as claimed in claim 1, wherein at least one of the spacer components comprises one or more coolant flow passages extending there through to form a coolant flow channel.

3. A stator component as claimed in claim 2, wherein the one or more coolant flow passages are located within the at least one spacer component so as to evenly cool the surface area of the at least one spacer component.

4. A stator as claimed in claim 1, 2 or 3, wherein a coolant flow channel is provided between at least one of the spacer components and at least one winding adjacent thereto.

5. A stator as claimed in any preceding claim, wherein the at least one spacer component is positioned between two or more circumferentially adjacent windings in the slot.

6. A stator as claimed in any preceding claim, wherein a coolant flow channel is provided between the spacer component and at least one winding adjacent to a first circumferential side thereof and between the spacer component and at least one winding adjacent to a second circumferential side thereof.

7. A stator as claimed in any preceding claim, wherein at least one of the plurality of spacer components comprises a body having tapered sides.

8. A stator as claimed in any preceding claim, wherein at least one of the plurality of spacer components further comprises a flange extending outwardly from the body at an end thereof.

9. A stator as claimed in any preceding claim, wherein at least one of the plurality of spacer components further comprises one or more sets of projections extending outwardly from circumferentially opposite sides thereof.

10. A stator as claimed in claim 9, wherein the at least one of the plurality of spacer components comprises a plurality of sets of projections, wherein the plurality of sets of projections are radially spaced.

11. A stator as claimed in claim 9 or 10, wherein one or more of the sets of projections is adapted to extend between two radially adjacent windings, and /or
wherein one or more of the sets of projections is adapted to extend from the opposite sides of the spacer component to the adjacent windings.

12. A stator as claimed in any preceding claim, wherein the coolant flow channel(s) extend from a first axial end of the core to a second axial end thereof.

13. An electrical machine comprising a stator as claimed in any preceding claim.

14. A method of cooling a stator as claimed in any of claims 1 to 12 or an electrical machine as claimed in claim 13, the method comprising flowing coolant through the coolant flow channel(s).

15. A method of assembling a stator for an electrical machine, the method comprising:
assembling a plurality of windings on the stator,
wherein each winding extends around at least one of a plurality of teeth, each tooth being formed between circumferentially adjacent radial slots in a core of the stator;
either before or during assembling the plurality of windings, inserting a spacer component to be located between two or more adjacent windings in one of the slots; and
either before or after inserting the spacer components, impregnating the windings with varnish or resin.
